# EUROPÄISCHE PATENTSCHRIFT

(11) **EP 3 602 103 B1**
(45) Veröffentlichungstag und Bekanntmachung des Hinweises auf die Patenterteilung: **02.09.2026**
(21) Anmeldenummer: 18712563.8
(22) Anmeldetag: 19.03.2018
(51) Int. Cl.: G01S 7/48, G01S 7/481, G01S 17/931

(54) **SENDEEINRICHTUNG FÜR EINE OPTISCHE ERFASSUNGSEINRICHTUNG EINES KRAFTFAHRZEUGS MIT EINEM SPEZIFISCHEN VORMONTAGEMODUL, OPTISCHE ERFASSUNGSEINRICHTUNG SOWIE KRAFTFAHRZEUG**
TRANSMISSION DEVICE WITH SPECIFIC PREASSEMBLY MODULE FOR AN OPTICAL DETECTION DEVICE OF A MOTOR VEHICLE, OPTICAL DETECTION DEVICE, AND MOTOR VEHICLE
DISPOSITIF D'ÉMISSION POUR UN DISPOSITIF DE DÉTECTION OPTIQUE D'UN VÉHICULE À MOTEUR COMPRENANT UN MODULE DE PRÉMONTAGE SPÉCIFIQUE, SYSTÈME DE DÉTECTION OPTIQUE ET VÉHICULE À MOTEUR

(30) Priorität: 21.03.2017 DE 102017105997
(43) Veröffentlichungstag der Anmeldung: 05.02.2020
(73) Patentinhaber: Valeo Schalter und Sensoren GmbH, 74321 Bietigheim-Bissingen (DE)
(72) Erfinder: NGUYEN, Ho-Hoai-Duc, 74321 Bietigheim-Bissingen (DE); HORVATH, Peter, 74321 Bietigheim-Bissingen (DE)
(74) Vertreter: Pothmann, Karsten
(86) Internationale Anmeldenummer: PCT/EP2018/056820
(87) Internationale Veröffentlichungsnummer: WO 2018/172246

(56) Entgegenhaltungen:
- EP-A1- 2 806 288
- WO-A2-2012/154510
- DE-A1- 102014 216 958
- DE-A1- 102015 115 101
- US-A1- 2013 229 645

## Beschreibung

Die vorliegende Erfindung betrifft eine Sendeeinrichtung für eine optische Erfassungseinrichtung eines Kraftfahrzeugs mit zumindest einer Lichtquelleneinheit. Die Sendeeinrichtung weist ferner eine Optikeinrichtung auf, welche eine Abstrahlform eines von der zumindest einen Lichtquelleneinheit ausgesendeten Lichts beeinflusst. Mittels der Sendeeinrichtung ist das Licht in eine Umgebung des Kraftfahrzeugs aussendbar. Ferner betrifft die Erfindung eine optische Erfassungseinrichtung mit einer Sendeeinrichtung sowie ein Kraftfahrzeug mit einer optischen Erfassungseinrichtung.

Sendeeinrichtungen aus dem Stand der Technik sind relativ groß ausgebildet, da insbesondere ein Gehäuse für eine Optikeinrichtung relativ groß ausgebildet ist. Des Weiteren weisen die Sendeeinrichtungen oftmals eine wärmeleitfähige Kupferplatte auf, auf welcher Komponenten der Sendeeinrichtung dann angeordnet sind. Des Weiteren werden die einzelnen Komponenten der Sendeeinrichtung einzeln zusammengefügt, insbesondere verschraubt, sodass die Sendeeinrichtung selbst aufgrund der zahlreichen Befestigungsmittel sehr groß ausgebildet ist. Somit ist der Zusammenbau der großen Sendeeinrichtung für die optische Erfassungseinrichtung mit hohem Zeitaufwand verbunden. Des Weiteren sind auch aufgrund der Größe, des Gewichts und aufgrund der Vielzahl von einzelnen Bauelementen die Sendeinrichtungen aus dem Stand der Technik nicht für einen automatisierten Zusammenbau geeignet.

Die WO 2012/059864 A1 offenbart ein optisches Element welches aus einem Substrat geformt ist, welches zumindest in einem Wellenlängenbereich der optischen Ausstrahlung transparent gestaltet ist. Das optische Element weist eine erste Schnittstelle auf, welche runde Regionen aufweist, und ein Teil einer Linsenanordnung ist, welche in dem Substrat ausgebildet ist. Das Substrat weist ferner eine Mehrzahl von optischen Spiegelelementen auf, welche an einer zweiten Schnittstelle des Substrats angeordnet sind. Die optischen Spiegelelemente sind derart angeordnet, dass sie eine optische Ausstrahlung reflektieren. Das Dokument DE 10 2014 216958 A1 offenbart einen optischen Verschiebungssensor für industrielle Anwendungen. Das Dokument DE 10 2015 115 101 A1 offenbart ein Sensorsystem eines Kraftfahrzeugs. Dokument EP2806288 A1 offenbart ein 3D-LADAR-Sensorsystem für Fahrzeuge. Dokument WO2012/154510 A2 offenbart ein Lichtquellenmodul mit niedriger Induktivität.

Die hier aufgezeigte Sendeeinrichtung weist zwar eine geringere Anzahl von Bauelementen auf, jedoch ist diese nicht für einen automatisierten Zusammenbau geeignet.

Aufgabe der vorliegenden Erfindung ist es, eine Sendeeinrichtung, eine optische Erfassungseinrichtung und ein Kraftfahrzeug zu schaffen, welche bzw. welches bauteilreduzierter ausgebildet ist. Die Sendeeinrichtung soll des Weiteren in einem Herstellungsverfahren schneller montiert werden können.

Diese Aufgabe wird durch eine Sendeeinrichtung, eine optische Erfassungseinrichtung sowie ein Kraftfahrzeug gemäß den unabhängigen Ansprüchen gelöst.

Die Erfindung betrifft eine Sendeeinrichtung für eine optische Erfassungseinrichtung eines Kraftfahrzeugs, wie in Anspruch 1 dargelegt. Die Sendeeinrichtung weist zumindest eine Lichtquelleneinheit auf. Des Weiteren weist die Sendeeinrichtung eine Optikeinrichtung auf, welche eine Abstrahlform eines von der zumindest einen Lichtquelleneinheit ausgesendeten Lichts beeinflusst. Mittels der Sendeeinrichtung ist das Licht in eine Umgebung des Kraftfahrzeugs aussendbar.

Die Sendeeinrichtung weist ein Gehäuse auf, in dem die Lichtquelleneinheit und die Optikeinrichtung angeordnet sind. Dadurch ist ein Vormontagemodul zur Montage auf einer Leiterplatte der Sendeeinrichtung ausgebildet. Dadurch ist eine kompakte und bauteilreduzierte Sendeeinrichtung geschaffen.

Durch das Anordnen der Lichtquelleneinheit und Optikeinrichtung in dem Gehäuse kann somit ein kompakter Bauteilverbund geschaffen werden, welcher als solcher dann einfach und auch automatisiert weiter montiert werden kann. Des Weiteren können somit insbesondere Schrauben oder weitere Befestigungsmittel entfallen, womit sowohl Gewicht als auch weiterer Bauraum eingespart werden kann. Durch die Anordnung der Lichtquelleneinheit und Optikeinrichtung in dem Gehäuse wird somit ein Modul geschaffen, welches vormontiert werden kann, sodass beim Herstellungsprozess der Sendeeinrichtung dieses Vormontagemodul sehr einfach und insbesondere zeitsparend auf der Leiterplatte der Sendeeinrichtung angeordnet werden kann. Des Weiteren ist das Gehäuse derart ausgebildet, dass dieses, im Gegensatz zum Stand der Technik, aufgrund der Einsparung des Bauraums, direkt auf der Leiterplatte angeordnet werden kann und somit Anschlussdrähte zu den Kontakten der Leiterplatte entfallen.

Gemäß einer vorteilhaften Ausgestaltungsform kann das Vormontagemodul, insbesondere bezüglich der das Vormontagemodul weiterverarbeitenden Fertigungstechnologie, als Oberflächenmontagemodul, welches auch als SMT-Modul bezeichnet werden kann, ausgebildet sein. Somit kann die Sendeeinrichtung als Vormontagemodul direkt auf die Leiterplatte mittels der zugehörigen Oberflächenmontagetechnik (Surface mounted technology, SMT) gelötet werden. Bei dieser Technologie kann insbesondere bei einem automatisierten Prozess das Oberflächenmontagemodul auf der Leiterplatte angeordnet werden. Somit kann durch die Ausbildung des Vormontagemoduls als Oberflächenmontagemodul bei dem automatisierten Prozess eine Zeitersparnis realisiert werden. Des Weiteren kann eine deutliche Verkleinerung der Schaltung bzw. der Sendeeinrichtung aufgrund der kleineren Bauteilabmessungen, der engeren Leiterbahnabstände auf der Leiterplatte und der dünneren Leiterbahnen auf der Leiterplatte realisiert werden. Aufgrund des Wegfalls von Anschlussdrähten und aufgrund der Verwendung der kleineren Bauelemente kommt es zu einer Gewichtsreduzierung der Sendeeinrichtung. Des Weiteren kann durch die automatische Fertigung eine höhere Fertigungsqualität erreicht werden, da Verschmutzungsquellen (Schneiden und Biegen der Anschlussdrähte) verhindert sind. Des Weiteren ist es aus der Oberflächenmontage bekannt, dass automatisierte optische Inspektionen aller kritischen optisch prüfbaren Faktoren möglich sind, wodurch ebenfalls eine Qualitätssteigerung realisiert wird.

Gemäß einer vorteilhaften Ausgestaltungsform kann das Gehäuse einen plattenförmigen Gehäusebasiskörper und einen, insbesondere quaderförmigen, Gehäuseaufsatz aufweisen, wobei das Gehäuse mittels des Gehäusebasiskörpers an der Leiterplatte anbringbar ist und in dem, insbesondere quaderförmigen, Gehäuseaufsatz die Optikeinrichtung und die Lichtquelleneinheit angeordnet sind. Mittels dieser Ausgestaltungsform können somit spezifisch für die Leiterplatte ausgebildete Gehäuse hergestellt werden, da insbesondere der quaderförmige Gehäuseaufsatz die Optikeinrichtung und die Lichtquelleneinheit enthält. Somit muss nur der Gehäusebasiskörper entsprechend der Leiterplatte angepasst werden. Somit kann die Optikeinrichtung und die Lichtquelleneinheit für eine Vielzahl von unterschiedlichen Leiterplatten bereitgestellt werden, bei welchem lediglich der Gehäusebasiskörper in seinen Ausmaßen an die Leiterplatte angepasst werden muss.

Bevorzugt weist die Optikeinrichtung einen externen Resonator auf. Durch die Anwendung des externen Resonators kann auf einfache Art und Weise die Lichtintensität der Sendeeinrichtung erhöht werden.

Ebenfalls vorteilhaft ist, wenn die Optikeinrichtung eine Linsenanordnung aufweist. Mittels der Linsenanordnung kann das Licht der Lichtquelleneinheit gebündelt werden und dadurch die Leistung der Sendeeinheit beziehungsweise des ausgesendeten Lichts erhöht werden.

In einer vorteilhaften Ausgestaltungsform kann der Gehäuseaufsatz auf der Innenseite stufenförmig ausgebildet sein und zumindest einen ersten und einen zweiten Absatz aufweisen. Es sind somit auf verschiedenen Höhenlagen Podeste ausgebildet, auf denen andere Komponenten angeordnet werden können. Insbesondere ist durch die einstückige Ausgestaltung der Absätze an dem Gehäuseaufsatz die Zahl separater Bauteile reduziert und dadurch auch Montageaufwand eingespart. Insbesondere ist damit auch das dauerhaft positionsgenaue Anordnen der anderen Komponenten in dem Gehäuseaufsatz ermöglicht. Somit ist eine einfache Möglichkeit geschaffen, entsprechende Bauelemente auf einfache Weise in dem Gehäuseaufsatz anordnen zu können. Insbesondere kann es sich bei diesen Bauelementen um eine Linsenanordnung und/oder einen externen Resonator handeln. Insbesondere ist dadurch vermieden, dass Befestigungselemente, welche die Bauteile im Gehäuseaufsatz befestigen sollen, insbesondere in einen optischen Weg der Lichtquelleneinheit, hineinragen können. Außerdem können dadurch weitere Bauteile eingespart und das Gewicht der Sendeeinrichtung reduziert werden. Dadurch kann auf besonders einfache Weise ein zuverlässiger Betrieb der Sendeeinrichtung realisiert werden.

Es hat sich weiterhin als vorteilhaft erwiesen, wenn auf dem tieferliegenden ersten Absatz, insbesondere dem Podest, der externe Resonator der Optikeinrichtung angeordnet ist und auf dem dazu höherliegenden Absatz, insbesondere dem Podest, die Linsenanordnung der Optikeinrichtung angeordnet ist. Mittels dieser Ausgestaltungsform kann das ausgesendete Licht der Lichtquelleneinheit an die gewünschte Abstrahlform angepasst werden.

Gemäß einer vorteilhaften Ausgestaltungsform kann der Gehäusebasiskörper eckig ausgebildet sein und in seiner die Plattenform aufspannenden Ebene in beiden Raumrichtungen über die Ausmaße des Gehäuseaufsatzes überstehend ausgebildet sein. Insbesondere kann dadurch eine einfache geometrische Form bereitgestellt werden, welche eine einfache Montage, insbesondere bei der automatisierten Montage, auf der Leiterplatte ermöglicht.

Es hat sich weiterhin als vorteilhaft erwiesen, wenn an dem Gehäusebasiskörper zumindest zwei elektrische Anschlussstellen ausgebildet sind, von denen einer ein Plus-Pol der Sendeeinrichtung und einer ein Minus-Pol der Sendeeinrichtung ist und/oder die elektrischen Anschlussstellen an einem ersten Rand des Gehäusebasiskörpers ausgebildet sind. Somit können die für den Betrieb der Sendeeinrichtung entsprechenden elektrischen Anschlussstellen auf dem Gehäusebasiskörper bereitgestellt werden, sodass die Sendeeinrichtung sehr einfach auf der entsprechenden Leiterplatte angelötet werden kann. Durch das Anlöten können insbesondere kleine Positionierungsfehler bei der Bestückung der Sendeeinrichtung auf der Leiterplatte automatisch durch die Oberflächenspannung des flüssigen Lots korrigiert werden. Des Weiteren kann somit auf einfache Weise die elektrische Kopplung der Sendeeinrichtung realisiert werden und somit die Sendeeinrichtung besonders effizient für eine Bestückung bei der Oberflächenmontagetechnik bereitgestellt werden.

Vorteilhafterweise können an dem Gehäusebasiskörper zumindest vier elektrische Anschlussstellen ausgebildet sein, wobei zwei elektrische Anschlussstellen als jeweils ein Plus-Pol der Sendeeinrichtung und zwei elektrische Anschlussstellen als jeweils ein Minus-Pol der Sendeeinrichtung ausgebildet sind und/oder wobei an einem ersten Rand des Gehäusebasiskörpers ein erster der zwei Plus-Pole und ein erster der zwei Minus-Pole ausgebildet sind und an einem dem ersten Rand gegenüberliegenden zweiten Rand des Gehäusebasiskörpers ein zweiter der zwei Plus-Pole und ein zweiter der zwei Minus-Pole ausgebildet sind. Somit können insbesondere redundante Anschlussstellen bereitgestellt werden, so dass auch bei einer hohen mechanischen Beanspruchung der Sendeeinrichtung, insbesondere bei Vibrationen während einer Fahrt eines Kraftfahrzeugs, in welchem die Sendeeinrichtung verbaut ist, die Funktionsfähigkeit der Sendeeinrichtung verbessert ist. Des Weiteren können insbesondere die jeweiligen Plus-Pole und die jeweiligen Minus-Pole direkt gegenüberliegend und redundant ausgebildet sein. Dies bedeutet, dass am ersten Rand ein erster Plus-Pol ausgebildet ist und auf dem gegenüberliegenden zweiten Rand direkt gegenüberliegend der zweite Plus-Pol ausgebildet ist. Analog verhält es sich zu den Minus-Polen. Somit kann insbesondere für die automatisierte Oberflächenmontage eine Sendeeinrichtung bereitgestellt werden, bei welcher die Sendeeinrichtung in zwei verschiedenen Verbaupositionen angeordnet werden kann. Dadurch kann die Zuverlässigkeit bei der Montage erhöht werden. Dies hat den Hintergrund darin, dass auf beiden Seiten beide Pole gleich angeordnet sind. Damit ist die Funktionsfähigkeit der Sendeeinrichtung verbessert.

Gemäß einer weiteren vorteilhaften Ausgestaltungsform kann die Lichtquelleneinheit eine Mehrzahl von Leuchtelementen aufweisen und ein jeweiliges Leuchtelement der Mehrzahl von Leuchtelementen und/oder eine jeweilige Lichtquelleneinheit einer Mehrzahl von Lichtquelleneinheiten der Sendeeinrichtung kann/können mittels einer Steuereinrichtung der Sendeeinrichtung separat ansteuerbar sein. Insbesondere kann dann einer jeweiligen Lichtquelleneinheit der Mehrzahl der Lichtquelleneinheiten zumindest zwei jeweilige elektrische Anschlussstellen zugeordnet sein, wobei eine erste der zwei elektrischen Anschlussstellen als ein Plus-Pol und eine zweite der zwei elektrischen Anschlussstellen als ein Minus-Pol der Lichtquelleneinheit ausgebildet ist. Insbesondere können dann vier elektrische Anschlussstellen pro Lichtquelleneinheit bereitgestellt werden, wobei jedes der Leuchtelemente mit dem Plus-Pol der Lichtquelleneinheit und dem Minus-Pol der Lichtquelleneinheit elektrisch gekoppelt ist. Insbesondere kann damit realisiert werden, dass das ausgesendete Licht im Wesentlichen homogen ausgesendet wird, da die unterschiedlichen Bereiche, welche unterschiedlich ausgeleuchtet sein können, aufgrund von Überlappungen, unterschiedlich angesteuert werden können. Dadurch kann insgesamt die Sendeeinrichtung noch genauer und zuverlässiger betrieben werden.

Es hat sich weiterhin als vorteilhaft erwiesen, wenn das Gehäuse mit seinem Gehäusebasiskörper und dem Gehäuseaufsatz einstückig, insbesondere aus Kunststoff, ausgebildet ist. Mittels dieser Ausgestaltungsform kann das Gehäuse sehr schnell und präzise hergestellt werden, beispielsweise mittels eines Spritzgussverfahrens. Insbesondere ist gerade dadurch auch die Bauteilzahl reduziert und eine Weitermontage des Vormontagemoduls besonders einfach und auch automatisiert ermöglicht.

Gemäß einer vorteilhaften Ausgestaltungsform kann die Lichtquelleneinheit eine Mehrzahl von Leuchtelementen aufweisen, welche insbesondere als VCSEL (Vertical-Cavity Surface-Emitting Laser) -Laserdioden ausgebildet sind. Da insbesondere die VCSEL-Laserdioden mit einer geringen Spannung betrieben werden können, kann die Ansteuerungselektronik, insbesondere die gesamte Steuereinrichtung der Sendeeinrichtung, besonders klein gehalten werden, da die Einzelbauteile kleiner als bei herkömmlichen Kantenemitterdioden sind, wodurch der Bauraum der Sendeeinrichtung signifikant reduziert werden kann. Die niedrige Leistung der VCSEL-Laserdiode gegenüber herkömmlichen Kantenemitterdioden wird dadurch ausgeglichen, dass anstatt nur der einen Laserdiode die Mehrzahl von VCSEL-Laserdioden genutzt wird. Besonders wird durch den Einsatz der VCSEL-Laserdioden verhindert, dass Meßartefakte beziehungsweise Kantenartefakte aufkommen. Dadurch kann die Sendeeinrichtung noch genauer und zuverlässiger betrieben werden.

Ein weitere Aspekt der Erfindung betrifft eine optische Erfassungseinrichtung mit einer erfindungsgemäßen Sendeeinrichtung. Die optische Erfassungseinrichtung kann ein Lidarsensor oder ein Laserscanner sein. Ferner betrifft ein weiterer Aspekt der Erfindung ein Kraftfahrzeug mit einer erfindungsgemäßen optischen Erfassungseinrichtung. Das Kraftfahrzeug kann insbesondere als Personenkraftfahrzeug ausgebildet sein. Vorteilhafte Ausführungsformen der erfindungsgemäßen Sendeeinrichtung sind als vorteilhafte Ausführungsformen der erfindungsgemäßen optischen Erfassungseinrichtung sowie des erfindungsgemäßen Kraftfahrzeugs anzusehen.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch aus den separierten Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungsformen, als offenbart anzusehen, die über die in den Rückbezügen der Ansprüche dargelegten Merkmalskombinationen hinausgehen oder abweichen.

Ausführungsbeispiele werden nachfolgend anhand von schematischen Zeichnungen erläutert.

Dabei zeigen:
- Fig. 1: eine schematische Draufsicht auf ein Ausführungsbeispiel eines erfindungsgemäßen Kraftfahrzeugs mit einer Ausführungsform einer erfindungsgemäßen optischen Erfassungseinrichtung;
- Fig. 2: eine Sendeeinrichtung gemäß dem Stand der Technik;
- Fig. 3: eine schematische Perspektivansicht einer Ausführungsform einer erfindungsgemäßen Sendeeinrichtung;
- Fig. 4: eine schematische Perspektivansicht einer Ausführungsform der erfindungsgemäßen Sendeeinrichtung;
- Fig. 5: eine schematische Perspektivansicht einer Ausführungsform der erfindungsgemäßen Sendeeinrichtung; und
- Fig. 6: eine schematische Draufsicht auf eine Ausführungsform der erfindungsgemäßen Sendeeinrichtung.

In den Figuren werden gleiche oder funktionsgleiche Elemente mit gleichen Bezugszeichen versehen.

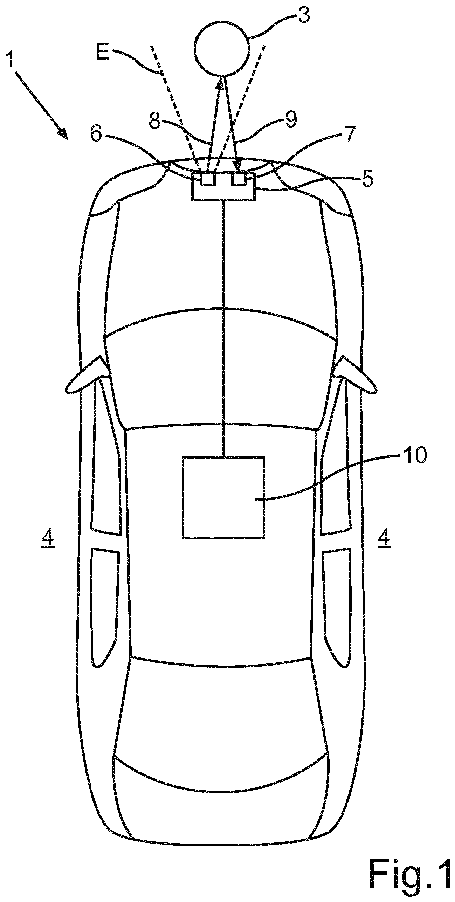

Fig. 1 zeigt ein Kraftfahrzeug 1 gemäß einer Ausführungsform der vorliegenden Erfindung. Das Kraftfahrzeug 1 ist in dem vorliegenden Ausführungsbeispiel als Personenkraftwagen ausgebildet. Das Kraftfahrzeug 1 umfasst ein Fahrerassistenzsystem 2. Mit dem Fahrerassistenzsystem 2 kann beispielsweise ein Objekt 3, welches sich in einer Umgebung 4 des Kraftfahrzeugs 1 befindet, erfasst werden. Insbesondere kann mittels des Fahrerassistenzsystems 2 ein Abstand zwischen dem Kraftfahrzeug 1 und dem Objekt 3 bestimmt werden.

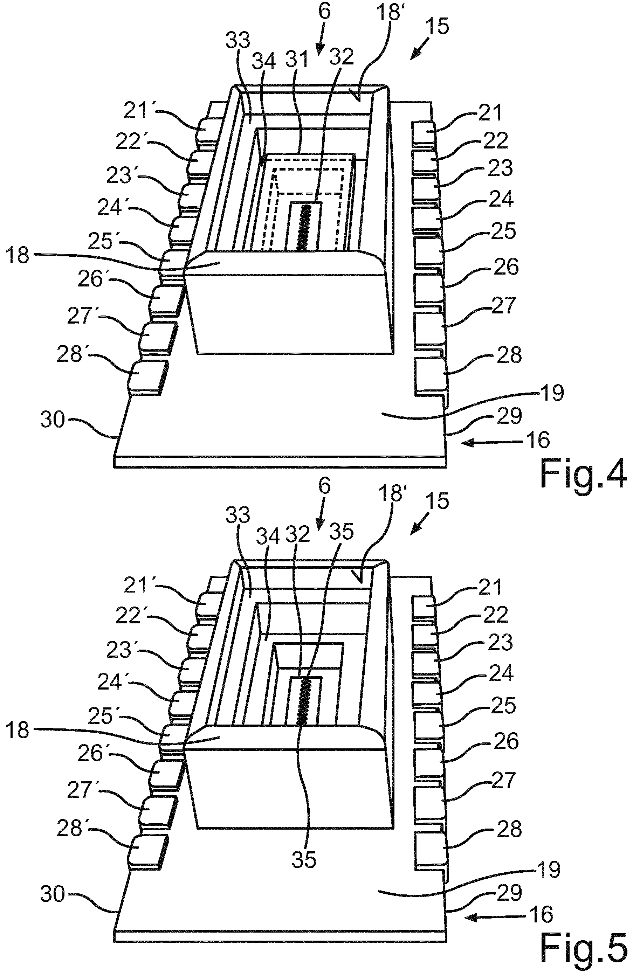

Das Fahrerassistenzsystem 2 umfasst zumindest eine optische Erfassungseinrichtung 5. Die optische Erfassungseinrichtung 5 kann als Lidarsensor oder als Laserscanner ausgebildet sein. Die optische Erfassungseinrichtung 5 umfasst eine Sendeeinrichtung 6, mit der Lichtstrahlen 8 ausgesendet werden können. Die Sendeeinrichtung 6 weist insbesondere eine Mehrzahl von Leuchtelementen 35 (Fig. 5) auf, welche insbesondere als VCSEL (Vertical-Cavity Surface-Emitting Laser) -Laserdioden ausgebildet sind. Die optische Erfassungseinrichtung 5 ist vorliegend an einem Frontbereich des Kraftfahrzeugs 1 angeordnet. Die optische Erfassungseinrichtung 5 kann auch an anderen Bereichen, beispielsweise an einem Heckbereich oder an einem Seitenbereich, des Kraftfahrzeugs 1 angeordnet werden. Das vorliegende Beispiel ist also nicht abschließend zu betrachten, sondern dient lediglich zur Veranschaulichung.

Mit der Sendeeinrichtung 6 können die Lichtstrahlen 8 innerhalb eines vorbestimmten Erfassungsbereichs E bzw. eines vorbestimmten Winkelbereichs ausgesendet werden. Beispielsweise können die Lichtstrahlen 8 in einem vorbestimmten horizontalen Winkelbereich ausgesendet werden. Darüber hinaus umfasst die optische Erfassungseinrichtung 5 eine nicht dargestellte Ablenkeinrichtung, mit der die Lichtstrahlen 8 in die Umgebung 4 abgelenkt werden können und damit der Erfassungsbereich E abgetastet wird.

Darüber hinaus umfasst die optische Erfassungseinrichtung 5 eine Empfangseinrichtung 7, die beispielsweise als eine Fotodiode ausgebildet sein kann. Mit der Empfangseinrichtung 7 können die von dem Objekt 3 reflektierten Lichtstrahlen 8 als Empfangssignal empfangen werden. Ferner kann die optische Erfassungseinrichtung 5 eine Steuereinrichtung 6a, die beispielsweise durch einen Mikrocontroller oder einen digitalen Signalprozessor gebildet sein kann, aufweisen. Das Fahrerassistenzsystem 2 umfasst ferner eine Steuerungseinrichtung 10, die beispielsweise durch ein elektronisches Steuergerät (ECU-electronic control unit) des Kraftfahrzeugs 1 gebildet sein kann. Die Steuerungseinrichtung 10 ist zur Datenübertragung mit der optischen Erfassungseinrichtung 5 verbunden. Die Datenübertragung kann beispielsweise über einen Datenbus des Kraftfahrzeugs 1 erfolgen.

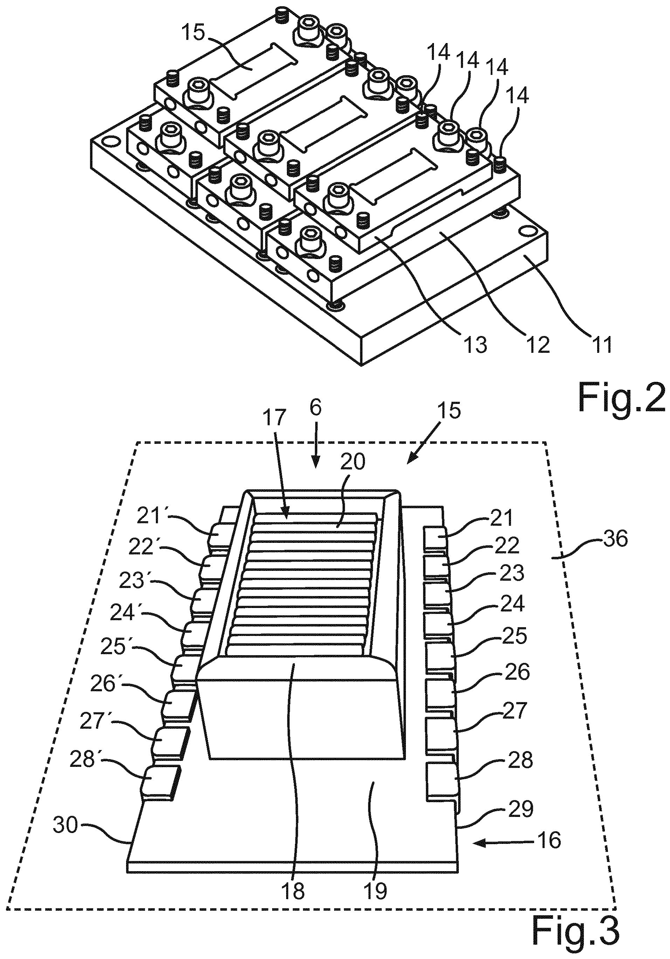

Fig. 2 zeigt eine Sendeeinrichtung 6 gemäß dem Stand der Technik. Die Sendeeinrichtung 6 weist eine Kupferplatte 11 auf, auf welcher eine Kantenemitterdiode angeordnet ist. Die Kupferplatte 11 dient insbesondere der Kühlung der Kantenemitterdiode, welche insbesondere beim Dauerbetrieb der Kantenemitterdiode notwendig ist. Ein Halter 12 für einen externen Resonator ist oberhalb der Kupferplatte 11 anbringbar. Ein Halter 13 für eine Linsenanordnung ist wiederum oberhalb des Halters 12 anbringbar. Mittels Schrauben 14 sind die einzelnen Bauteile aufeinander schraubbar. Insbesondere ist dann der Halter 12 auf der Kupferplatte 11 verschraubbar und der Halter 13 auf dem Halter 12 verschraubbar. Diese Anordnung ist sehr schwer, beispielsweise aufgrund der Kupferplatte 11, und nur mit viel Aufwand zusammenbaubar. Aufgrund der Größe ist die Sendeeinrichtung 6 aus dem der Stand der Technik nicht auf einer Leiterplatte 36 (Fig. 3) der Sendeeinrichtung 6 direkt anbringbar. Des Weiteren ist der Zusammenbau spezifisch und nur in Einzelmontage möglich und daher sehr zeitaufwendig.

Fig. 3 zeigt in einer schematischen Perspektivansicht die Sendeeinrichtung 6 gemäß einer Ausführungsform der Erfindung. Fig. 3 zeigt ein einstückiges Gehäuse 15, in dem eine Lichtquelleneinheit 32 (Fig. 4) und insbesondere eine Optikeinrichtung 17 angeordnet sind. Das Gehäuse 15 ist als Vormontagemodul 16, insbesondere als SMT-Modul beziehungsweise als Oberflächenmontagemodul, ausgebildet. Dadurch kann das Vormontagemodul 16 in einem SMT-Prozess dann auch einfach und automatisiert weiterverarbeitet werden, insbesondere zur Fertigung der optischen Erfassungseinrichtung 5. Insbesondere kann dadurch die Sendeeinrichtung 6 in einem Oberflächenmontageprozess gemäß der Oberflächenmontagetechnologie auf der Leiterplatte 36 der Sendeeinrichtung 6 angeordnet werden. Insbesondere kann der Oberflächenmontageprozess automatisiert stattfinden, sodass eine Zeitersparnis gegenüber der Einzelmontage erreicht werden kann.

Fig. 3 zeigt insbesondere einen Gehäuseaufsatz 18 des Gehäuses 15, welcher insbesondere quaderförmig ausgebildet ist. Des Weiteren zeigt Fig. 3 einen Gehäusebasiskörper 19 des Gehäuses 15, welcher insbesondere plattenförmig ausgebildet ist. Innerhalb des quaderförmigen Gehäuseaufsatzes 18 können die Optikeinrichtung 17 und die hier nicht dargestellten Leuchtelemente 35 (Fig. 5) angeordnet sein. Die Optikeinrichtung 17 weist wiederum insbesondere die Linsenanordnung 20 und einen nicht dargestellten externer Resonator 31 (Fig. 4) auf. Mittels der Optikeinrichtung 17 kann insbesondere eine Abstrahlform der durch die Leuchtelemente 35 und/oder der Lichtquelleneinheit 32 ausgesendeten Lichts beeinflusst werden. Das ausgesendete Licht wiederum ist dann in die Umgebung 4 des Kraftfahrzeugs 1 aussendbar.

Der Gehäusebasiskörper 19 ist insbesondere eckig ausgebildet und in seiner die Plattenform aufspannenden Ebene in beiden Raumrichtungen über die Ausmaße des Gehäuseaufsatzes 18 überstehend ausgebildet. Der Gehäusebasiskörper 19 weist eine Mehrzahl von elektrischen Anschlussstellen 21 bis 28 und 21' bis 28' auf. Die elektrischen Anschlussstellen 21 bis 28 und 21' bis 28' sind insbesondere an einem ersten bezüglich der rechteckform längeren Rand 29 des Gehäusebasiskörpers 19 und einem zweiten gegenüberliegenden Rand 30 des Gehäusebasiskörpers 19 ausgebildet. Insbesondere bilden die hier dargestellten Anschlussstellen 21 und 21' einen Plus-Pol der Sendeeinrichtung 6, die Anschlussstellen 22 und 22' einen Minus-Pol der Sendeeinrichtung 6. Die Anschlussstellen 23 und 23' bilden einen Plus-Pol und die Anschlussstellen 24 und 24' bilden einen Minus-Pol. Die Anschlussstellen 25 und 25' bilden einen Plus-Pol und die Anschlussstellen 26 und 26' einen Minus-Pol. Die Anschlussstellen 27 und 27' bilden einen Plus-Pol und die Anschlussstellen 28 und 28' bilden einen Minus-Pol. Die Polausbildungen sind insbesondere redundant an den beiden Rändern 29 und 30 ausgebildet. Die hier aufgezeigte Polausbildung ist lediglich beispielhaft und nicht abschließend anzusehen. Die Polausbildung kann sowohl in der Anzahl also auch ich der Anordnung der Anschlussstellen 21 bis 28 und 21' bis 28' variieren. Die Anzahl der Anschlussstellen 21 bis 28 und 21' bis 28' beziehungsweise der Pole kann insbesondere abhängig sein von der Anzahl der Lichtquelleneinheiten 32 innerhalb der Sendeeinrichtung 6, beziehungsweise der Anzahl der Leuchtelemente 35 innerhalb einer jeweiligen Lichtquelleneinheit 32.

Insbesondere können die entsprechenden Anschlussstellen 21 bis 28 und 21' bis 28' mit korrespondierenden Anschlussstellen auf der Leiterplatte 36 verlötet werden, wodurch der automatisierte Prozess einer Montage vereinfacht durchgeführt werden kann.

Zu Fig. 3 ist auch beispielhaft die Leiterplatte 36 der Sendeeinrichtung 6 gezeigt auf welcher das Vormontagemodul 16 durch SMT-Fertigungstechnik aufgebracht ist.

Fig. 4 zeigt eine weitere Perspektivansicht einer Ausführungsform der erfindungsgemäßen Sendeeinrichtung 6. Die Linsenanordnung 20 der Optikeinrichtung 17 ist in Fig. 4 nicht dargestellt. Der externe Resonator 31 der Optikeinrichtung 17 ist in Fig. 4 dargestellt. Mittels des externen Resonators 31 kann das Licht der Lichtquelleneinheit 32 innerhalb der Anordnung reflektiert werden. Dadurch kann die Lichtintensität des durch die Sendeeinrichtung 6 ausgekoppelten Lichts erhöht werden. Unterhalb des externen Resonators 31 befindet sich die Lichtquelleneinheit 32. Die Lichtquelleneinheit 32 ist insbesondere auf dem Gehäusebasiskörper 19 angeordnet.

Fig. 4 zeigt weiterhin, dass der hohle Gehäuseaufsatz 18 insbesondere stufenförmig, insbesondere mit zumindest zwei Absätzen 33, 34 ausgebildet ist, welche insbesondere als Podeste ausgebildet sind, und auf einer Innenseite 18' des Gehäuseaufsatzes 18 ausgebildet sind. Auf dem tieferliegenden ersten Absatz 34 ist insbesondere der externe Resonator 31 angeordnet, und auf dem höherliegenden zweiten Absatz 33, welcher insbesondere höher liegt als der erste Absatz 34, ist insbesondere die Linsenanordnung 20 angeordnet.

Fig. 5 zeigt eine weitere schematische Perspektivansicht einer Ausführungsform der erfindungsgemäßen Sendeeinrichtung 6. Die Optikeinrichtung 17 ist in Fig. 5 nicht dargestellt. Die Absätze 33 und 34 sind hingegen vollständig dargestellt. Des Weiteren ist in Fig. 5 zu erkennen, dass die Lichtquelleneinheit 32 eine Mehrzahl von den Leuchtelementen 35 aufweist. Die Leuchtelemente 35 sind insbesondere als VCSEL-Laserdioden ausgebildet.

Insbesondere ist aus der Fig. 5 ersichtlich, dass das Gehäuse 15 insbesondere einstückig ausgebildet ist. Insbesondere kann das Gehäuse 15 aus einem Kunststoff ausgebildet sein. Dadurch ist eine besonders einfache und präzise Herstellung des Gehäuses 15 realisierbar. Beispielsweise kann das Gehäuse 15 mittels eines Spritzgussverfahrens hergestellte werden. Es sind auch weitere Herstellungsverfahren möglich.

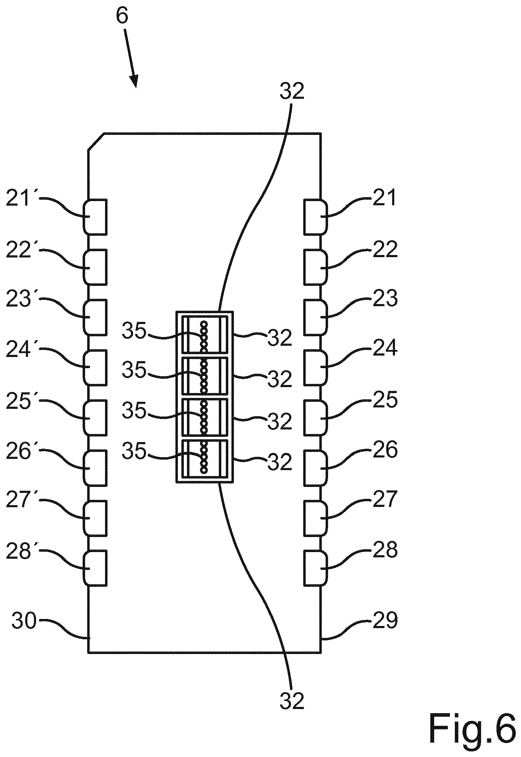

Fig. 6 zeigt eine schematische Draufsicht auf eine Ausführungsform der erfindungsgemäßen Sendeeinrichtung 6. Die in der Fig. 6 gezeigte Ausführungsform der Sendeeinrichtung 6 weist vier Lichtquelleneinheiten 32 auf. Die Lichtquelleneinheiten 32 weisen wiederum eine Mehrzahl von Leuchtelementen 35 auf, welche insbesondere als VCSEL-Laserdioden ausgebildet sind. Insbesondere kann dann vorgesehen sein, dass die Lichtquelleneinheit 32 beziehungsweise die Leuchtelemente 35 einzeln mittels der Steuereinrichtung 6a der optischen Erfassungseinrichtung 5 ansteuerbar sind. Dadurch kann insbesondere eine homogene Lichtabstrahlung realisiert werden. Beispielsweise kann dann über die Anschlussstellen 21 und 21' der Plus-Pol für eine erste der Lichtquelleneinheiten 32 und durch die Anschlussstellen 22 und 22' ein Minus-Pol für die erste der Lichtquelleneinheiten 32 bereitgestellt werden. Durch die Anschlussstellen 23 und 23' kann wiederum ein Plus-Pol für eine zweite der Lichtquelleneinheiten 32 und durch die Anschlussstellen 24 und 24' eine entsprechender Minus-Pol für die zweite Lichtquelleneinheit 32 bereitgestellt werden. Durch die Anschlussstellen 25 und 25' kann ein Plus-Pol für eine dritte Lichtquelleneinheit 32 und durch die Anschlussstellen 26 und 26' der entsprechende Minus-Pol für die dritte Lichtquelleneinheit 32 bereitgestellt werden. Durch die Anschlussstellen 27 und 27' kann wiederum ein Plus-Pol für eine vierte Lichtquelleneinheit 32 und durch die Anschlussstellen 28 und 28' ein entsprechender Minus-Pol für die vierte Lichtquelleneinheit 32 bereitgestellt werden. Die Anzahl der Lichtquelleneinheiten 32 ist nur beispielhaft und keinesfalls abschließend zu sehen. Die Anzahl der Anschlussstellen 21 bis 28 und 21' bis 28' können dann entsprechend der Anzahl der Lichtquelleneinheiten 32 ebenfalls variieren.

Wie in Fig. 6 ersichtlich, sind insbesondere die redundanten Anschlussstellen 21 und 21' direkt gegenüberliegend auf den Rändern 29 und 30 ausgebildet. Analoges gilt für die Anschlussstellen 22 bis 28 und 22' bis 28'. Dadurch können die Anschlussstellen 21 bis 28 und 21' bis 28' der einzelnen Lichtquelleneinheit 32 einfach realisiert werden, insbesondere können dadurch die Anschlussstellen 21 bis 28 und 21' bis 28' für die Vormontage für den Oberflächenmontageprozess bereitgestellt werden.

## Patentansprüche

1. Sendeeinrichtung (6) für eine optische Erfassungseinrichtung (5) eines Kraftfahrzeugs (1), mit zumindest einer Lichtquelleneinheit (32) und mit einer Optikeinrichtung (17), welche eine Abstrahlform eines von der zumindest einen Lichtquelleneinheit (32) ausgesendeten Lichts beeinflusst, wobei mittels der Sendeeinrichtung (6) das Licht in eine Umgebung (4) des Kraftfahrzeugs (1) ausgesendet wird,
**dadurch gekennzeichnet, dass**
die Sendeeinrichtung (6) ein Gehäuse (15) aufweist, in dem die Lichtquelleneinheit (32) und die Optikeinrichtung (17) angeordnet sind und dadurch ein Vormontagemodul (16) zur Montage auf einer Leiterplatte (36) der Sendeeinrichtung (6) ausgebildet ist, dass das Gehäuse (15) einen plattenförmigen Gehäusebasiskörper (19) und einen Gehäuseaufsatz (18) aufweist, wobei das Gehäuse (15) mittels des Gehäusebasiskörpers (19) an der Leiterplatte (36) anbringbar ist und in dem Gehäuseaufsatz (18) die Optikeinrichtung (17) und die Lichtquelleneinheit (32) angeordnet sind, dass an dem Gehäusebasiskörper (19) zumindest zwei elektrische Anschlussstellen (21 bis 28; 21' bis 28') ausgebildet sind, von denen eine ein Plus-Pol der Sendeeinrichtung (6) und eine ein Minus-Pol der Sendeeinrichtung (6) ist und die elektrischen Anschlussstellen (21 bis 28) an einem ersten Rand (29) des Gehäusebasiskörpers (19) ausgebildet sind, und dass der Gehäusebasiskörper (19) eckig ausgebildet ist und in seiner die Plattenform aufspannenden Ebene in beiden Raumrichtungen über die Ausmaße des Gehäuseaufsatzes (18) überstehend ausgebildet ist.

2. Sendeeinrichtung (6) nach Anspruch 1,
**dadurch gekennzeichnet, dass**
das Vormontagemodul (16) als Oberflächenmontagemodul ausgebildet ist.

3. Sendeeinrichtung (6) nach Anspruch 1,
**dadurch gekennzeichnet, dass**
der Gehäuseaufsatz (18) auf einer Innenseite (18') des Gehäuseaufsatzes (18) stufenförmig ausgebildet ist und zumindest einen ersten Absatz (34) und einen zweiten Absatz (33) aufweist.

4. Sendeeinrichtung (6) nach einem der Ansprüche 1 bis 3,
**dadurch gekennzeichnet, dass**
an dem Gehäusebasiskörper (19) zumindest vier elektrische Anschlussstellen (21 bis 28; 21' bis 28') ausgebildet sind, wobei zwei elektrische Anschlussstellen (21 bis 28; 21' bis 28') als jeweils ein Plus-Pol der Sendeeinrichtung (6) und zwei elektrische Anschlussstellen (21 bis 28; 21' bis 28') als jeweils ein Minus-Pol der Sendeeinrichtung (6) ausgebildet sind und an einem ersten Rand (29) des Gehäusebasiskörpers (19) ein erster der zwei Plus-Pole und ein erster der zwei Minus-Pole ausgebildet sind und an einem dem ersten Rand (29) gegenüberliegenden zweiten Rand (30) des Gehäusebasiskörpers (19) ein zweiter der zwei Plus-Pole und ein zweiter der zwei Minus-Pole ausgebildet sind.

5. Sendeeinrichtung (6) nach einem der vorhergehenden Ansprüche,
**dadurch gekennzeichnet, dass**
die Optikeinrichtung (17) eine Linsenanordnung (20) aufweist.

6. Sendeeinrichtung (6) nach einem der vorhergehenden Ansprüche,
**dadurch gekennzeichnet, dass**
das Gehäuse (15) einstückig, insbesondere aus Kunststoff, ausgebildet ist.

7. Optische Erfassungseinrichtung (5) mit einer Sendeeinrichtung (6) nach einem der Ansprüche 1 bis 6 und mit einer Empfangseinrichtung (7).

8. Kraftfahrzeug (1) mit einer optischen Erfassungseinrichtung (5) nach Anspruch 7.

## Claims

1. Transmitting device (6) for an optical detection device (5) of a motor vehicle (1), with at least one light source unit (32) and with an optical device (17), which influences an emission pattern of a light emitted by the at least one light source unit (32), wherein by means of the transmitting device (6) the light is emitted into an environment (4) of the motor vehicle (1), **characterized in that** the transmitting device (6) has a housing (15) in which the light source unit (32) and the optical device (17) are arranged and thereby forms a pre-assembly module (16) for mounting on a circuit board (36) of the transmitting device (6), that the housing (15) has a plate-shaped housing base body (19) and a housing attachment (18), wherein the housing (15) can be attached to the circuit board (36) by means of the housing base body (19) and the optical device (17) and the light source unit (32) are arranged in the housing attachment (18), that at least two electrical connection points (21 to 28; 21' to 28') are formed on the housing base body (19), of which - one is a positive pole of the transmitting device (6) and - one is a negative pole of the transmitting device (6) and the electrical connection points (21 to 28) are formed on a first edge (29) of the housing base body (19), and that the housing base body (19) is formed angularly and is formed in its plane spanning the plate shape to protrude beyond the dimensions of the housing attachment (18) in both spatial directions.

2. Transmitting device (6) according to claim 1, **characterized in that** the pre-assembly module (16) is designed as a surface mount module.

3. Transmitting device (6) according to claim 1, **characterized in that** the housing attachment (18) is formed in a stepped manner on an inner side (18') of the housing attachment (18) and has at least a first recess (34) and a second recess (33).

4. Transmitting device (6) according to one of claims 1 to 3, **characterized in that** at least four electrical connection points (21 to 28; 21' to 28') are formed on the housing base body (19), wherein two electrical connection points (21 to 28; 21' to 28') are each formed as a positive pole of the transmitting device (6) and two electrical connection points (21 to 28; 21' to 28') are each formed as a negative pole of the transmitting device (6) and a first of the two positive poles and a first of the two negative poles are formed on a first edge (29) of the housing base body (19) and a second of the two positive poles and a second of the two negative poles are formed on a second edge (30) of the housing base body (19) opposite the first edge (29).

5. Transmitting device (6) according to one of the preceding claims, **characterized in that** the optical device (17) has a lens arrangement (20).

6. Transmitting device (6) according to one of the preceding claims, **characterized in that** the housing (15) is formed in one piece, in particular from plastic.

7. Optical detection device (5) with a transmitting device (6) according to one of claims 1 to 6 and with a receiving device (7).

8. Motor vehicle (1) with an optical detection device (5) according to claim 7.

## Revendications

1. Dispositif d'émission (6) pour un dispositif de détection optique (5) d'un véhicule automobile (1), comprenant au moins une unité de source lumineuse (32) et un dispositif optique (17), qui influence une forme de rayonnement d'une lumière émise par l'au moins une unité de source lumineuse (32), la lumière étant émise dans un environnement (4) du véhicule automobile (1) au moyen du dispositif d'émission (6), **caractérisé en ce que** le dispositif d'émission (6) présente un boîtier (15) dans lequel sont disposés l'unité de source lumineuse (32) et le dispositif optique (17), formant ainsi un module de pré-montage (16) pour le montage sur une carte de circuit imprimé (36) du dispositif d'émission (6), **en ce que** le boîtier (15) présente un corps de base de boîtier en forme de plaque (19) et une partie supérieure de boîtier (18), le boîtier (15) pouvant être fixé à la carte de circuit imprimé (36) au moyen du corps de base de boîtier (19) et le dispositif optique (17) et l'unité de source lumineuse (32) étant disposés dans la partie supérieure de boîtier (18), **en ce qu'**au moins deux points de connexion électrique (21 à 28 ; 21' à 28') sont formés sur le corps de base de boîtier (19), dont - l'un est un pôle positif du dispositif d'émission (6) et - l'un est un pôle négatif du dispositif d'émission (6) et les points de connexion électrique (21 à 28) sont formés sur un premier bord (29) du corps de base de boîtier (19), et **en ce que** le corps de base de boîtier (19) est de forme angulaire et est formé de manière à dépasser, dans son plan définissant la forme de plaque, les dimensions de la partie supérieure de boîtier (18) dans les deux directions spatiales.

2. Dispositif d'émission (6) selon la revendication 1, **caractérisé en ce que** le module de pré-montage (16) est conçu comme un module de montage en surface.

3. Dispositif d'émission (6) selon la revendication 1, **caractérisé en ce que** la partie supérieure de boîtier (18) est formée en gradins sur une face intérieure (18') de la partie supérieure de boîtier (18) et présente au moins un premier palier (34) et un deuxième palier (33).

4. Dispositif d'émission (6) selon l'une des revendications 1 à 3, **caractérisé en ce qu'**au moins quatre points de connexion électrique (21 à 28 ; 21' à 28') sont formés sur le corps de base de boîtier (19), deux points de connexion électrique (21 à 28 ; 21' à 28') étant formés chacun comme un pôle positif du dispositif d'émission (6) et deux points de connexion électrique (21 à 28 ; 21' à 28') étant formés chacun comme un pôle négatif du dispositif d'émission (6), et un premier des deux pôles positifs et un premier des deux pôles négatifs étant formés sur un premier bord (29) du corps de base de boîtier (19), et un second des deux pôles positifs et un second des deux pôles négatifs étant formés sur un deuxième bord (30) du corps de base de boîtier (19) opposé au premier bord (29).

5. Dispositif d'émission (6) selon l'une des revendications précédentes, **caractérisé en ce que** le dispositif optique (17) comprend un agencement de lentilles (20).

6. Dispositif d'émission (6) selon l'une des revendications précédentes, **caractérisé en ce que** le boîtier (15) est formé d'une seule pièce, notamment en plastique.

7. Dispositif de détection optique (5) comprenant un dispositif d'émission (6) selon l'une des revendications 1 à 6 et un dispositif de réception (7).

8. Véhicule automobile (1) comprenant un dispositif de détection optique (5) selon la revendication 7.
